# FASCICULE DE BREVET EUROPEEN

(11) **EP 1 060 977 B1**
(45) Date de publication et mention de la délivrance du brevet: **27.08.2003**
(21) Numéro de dépôt: 00401644.0
(22) Date de dépôt: 09.06.2000
(51) Int. Cl.: B62D 53/08

(54) **Ensemble routier comportant une sellette à déverrouillage pneumatique**
Wegtransport mit pneumatischer Verriegelungseinrichtung für die Sattelkupplung
Road transport comprising a pneumatically lockable fifth-wheel coupling

(30) Priorité: 14.06.1999 FR 9907487
(43) Date de publication de la demande: 20.12.2000
(73) Titulaire: ASCA CARROSSIER CONSTRUCTEUR, F-78680 Epone (FR)
(72) Inventeur: Patriarca, Yannick, 78410 Aubergenville (FR); Boissonnade, Yves, 27620 Gasny (FR)
(74) Mandataire: Texier, Christian

(56) Documents cités:
- US-A- 3 239 239
- US-A- 3 888 513
- US-A- 5 472 223
- US-A- 5 660 408

## Description

La présente invention concerne les ensembles routiers, notamment du type comprenant un tracteur et une remorque ou un tracteur et deux remorques.

On connaît un ensemble routier dans lequel une remorque est reliée à une sellette du véhicule menant au moyen d'une cheville de la remorque. La cheville est enfermée dans la sellette, laquelle comprend un dispositif de verrouillage à ressort de rappel maintenant la sellette à l'état verrouillé. Le dispositif comprend un vérin pneumatique qui, lorsqu'il est alimenté en air, agit à l'encontre de ce ressort pour le déverrouillage de la sellette. 'Pour dételer la remorque du véhicule menant, l'opérateur doit donc alimenter le vérin en air en effectuant un branchement pneumatique spécifique. Par ailleurs, le dételage suppose d'interrompre les liaisons pneumatiques existant entre la remorque et le véhicule en désaccouplant les mains concernées. En effet, une main de la remorque est accouplée à une main du véhicule menant pour que ce dernier alimente la remorque en air comprimé actionnant les freins. De plus, deux autres mains sont accouplées pour qu'une commande à air commande les freins de la remorque depuis le véhicule menant. Il ne s'agit là que de certaines des opérations nécessaires au dételage qui rendent celui-ci relativement laborieux. De plus, les opérations inverses sont requises pour l'attelage. Or, l'oubli de l'une ou l'autre de ces nombreuses opérations peut conduire à des conséquences nuisibles pour la sécurité ou la durée de vie du matériel.

Un but de l'invention est de fournir un ensemble routier dans lequel les opérations d'attelage et de dételage au moyen d'une sellette pneumatique soient simplifiées.

En vue de la réalisation de ce but, on prévoit selon l'invention un ensemble routier comprenant un véhicule comportant une source d'air présentant une main d'accouplement, et une sellette verrouillable comprenant un vérin et une main d'accouplement, une remorque présentant une main apte à être accouplée à la main de la source pour alimenter la remorque en air, dans lequel la main de la sellette est apte à être accouplée à la main de la source pour alimenter le vérin en air.

Ainsi, la même main du véhicule menant sert suivant les circonstances à l'accouplement à la main du vérin et à la main de la remorque. Cette même main sert donc pour produire le déverrouillage et pour permettre le cas échéant la désactivation des freins de la remorque (en l'absence d'alimentation en air, les freins de la remorque sont activés). Cette main de remorque ne peut donc être accouplée à la fois qu'à une seule parmi la main de la sellette et la main de la remorque. Or, ces accouplements doivent justement être exclusifs l'un de l'autre. On limite donc grandement le risque d'erreur : l'opérateur souhaitant dételer doit donc nécessairement désactiver préalablement le circuit d'alimentation des freins de la remorque, de sorte que celle-ci est immobilisée. De même, l'opérateur attelant la remorque doit nécessairement interrompre l'activation du vérin (plaçant ainsi le vérin dans l'état associé au verrouillage) en vue de brancher le circuit d'alimentation des freins de la remorque. On simplifie en outre les opérations en réduisant le nombre de mains d'accouplement disponibles.

Avantageusement, la main de la remorque communique avec un circuit d'air d'actionnement de freinage de la remorque, la remorque présentant une deuxième main communiquant avec un circuit d'air de commande de freinage de la remorque.

Avantageusement, le véhicule et la remorque comportent chacun une carrosserie, la remorque étant apte à être attelée au véhicule de sorte que les carrosseries sont séparées par un espace, le véhicule comportant un organe de déblocage présentant une extrémité de manoeuvre et mobile entre une position dans laquelle il n'autorise pas le déverrouillage de la sellette et une position dans laquelle il autorise le déverrouillage, l'extrémité de manoeuvre s'étendant au droit de l'espace de séparation.

Ainsi, lorsque les mains sont accessibles dans l'espace de séparation, l'opérateur peut procéder au déblocage de la sellette sans avoir à se déplacer le long du véhicule.

L'ensemble pourra en outre présenter l'une au moins des caractéristiques suivantes :
- l'ensemble comprend un dispositif de déverrouillage de la sellette comportant un élément autre que l'organe de déblocage, directement visible depuis l'extérieur du véhicule et apte à occuper deux positions différentes suivant que la sellette est verrouillée ou déverrouillée, cet élément présentant de préférence une couleur vive ;
- l'organe de déblocage comprend une extrémité d'actionnement de la sellette, les deux extrémités étant non coplanaires ;
- l'organe de déblocage est conformé de sorte qu'il tend sous l'effet de la pesanteur à se placer dans la position dans laquelle il n'autorise pas le déverrouillage ;
- l'organe de déblocage est relié par un lien souple à un dispositif de verrouillage de la sellette ;
- le véhicule comprend une cheville d'attelage le rendant apte à être mené ;
- l'ensemble comprend en outre un tracteur ; et
- le véhicule est un tracteur.

D'autres caractéristiques et avantages de l'invention apparaîtront encore dans la description suivante d'un mode préféré de réalisation donné à titre d'exemple non limitatif. Aux dessins annexés :
- la figure 1 est une- vue de côté en élévation d'un ensemble routier selon l'invention
- la figure 2 est une vue de côté en élévation d'un détail de l'ensemble, depuis le plan longitudinal médian ;
- la figure 3 est une vue partielle de dessus de l'arrière de la première remorque de l'ensemble de la figure 1 ;
- la figure 4 est une vue arrière partielle de l'ensemble de la figure 1 depuis le centre de la deuxième remorque ; et
- les figures 5 et 6 sont deux vues du détail D de la figure 4 montrant deux positions de l'organe de déblocage.

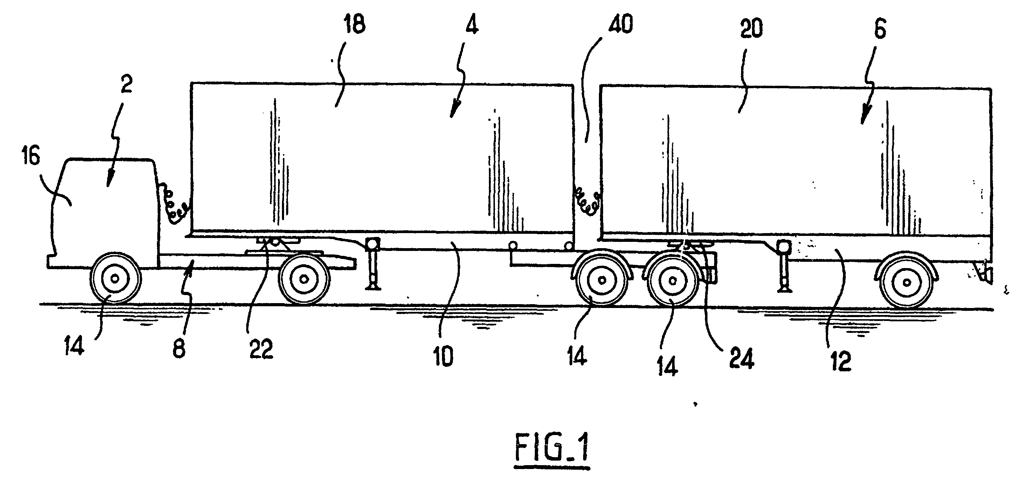

On a illustré à la figure 1 un ensemble routier selon un mode préféré de réalisation. Il comprend un tracteur 2, une première remorque ou remorque avant 4 articulée au tracteur, et une deuxième remorque ou remorque arrière 6 articulée à la remorque avant.

Chacun des trois véhicules 2, 4, 6 comprend un châssis respectif 8, 10, 12 muni de roues 14, et une carrosserie respective 16, 18, 20. Les carrosseries 18 et 20 des remorques sont aptes à recevoir de grands volumes de marchandises. Bien que ce ne soit pas le cas ici puisque la carrosserie du tracteur 16 est limitée à la cabine du conducteur, cette carrosserie pourrait elle aussi être conformée pour recevoir un grand volume de marchandises. On remarque que la remorque avant 4 présente en l'espèce un double essieu arrière.

Le tracteur 2 comprend une sellette d'attelage 22 apte à recevoir une cheville d'attelage de la remorque avant 4. De même, cette dernière comprend une sellette 24 apte à recevoir une cheville de la remorque arrière 6.

On va décrire en référence aux figures le détail de l'attelage de la remorque arrière 6 à la remorque avant 4. Mais il va de soi que cette description est également valable pour l'attelage de la remorque avant 4 au tracteur 2.

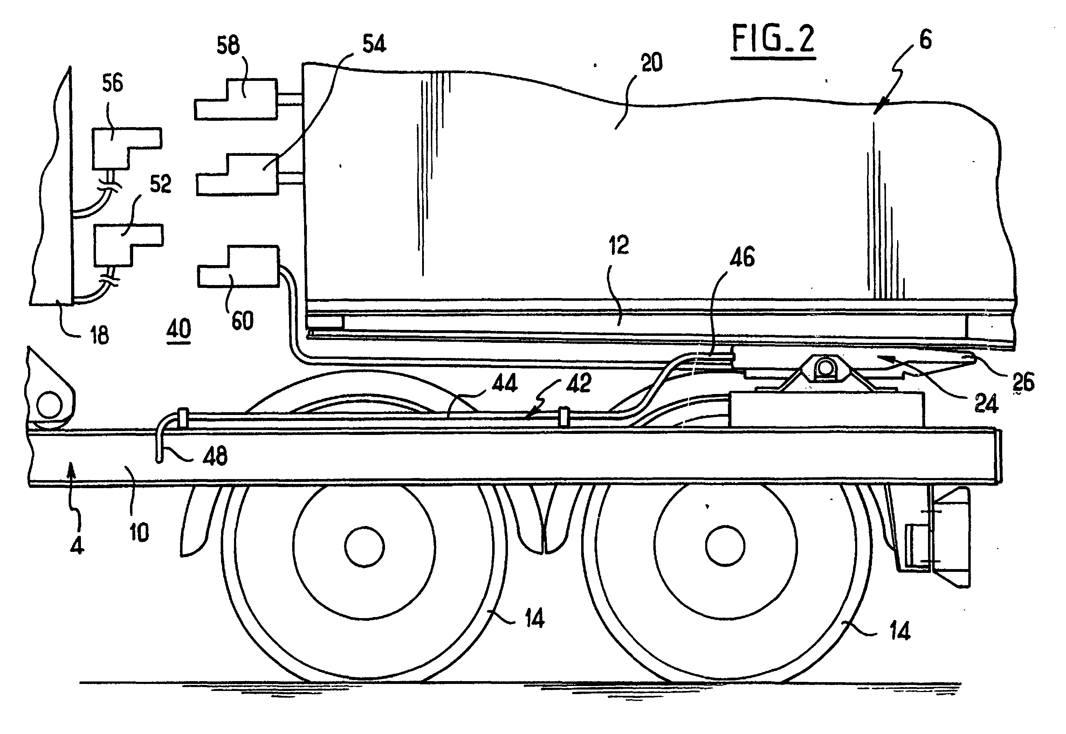

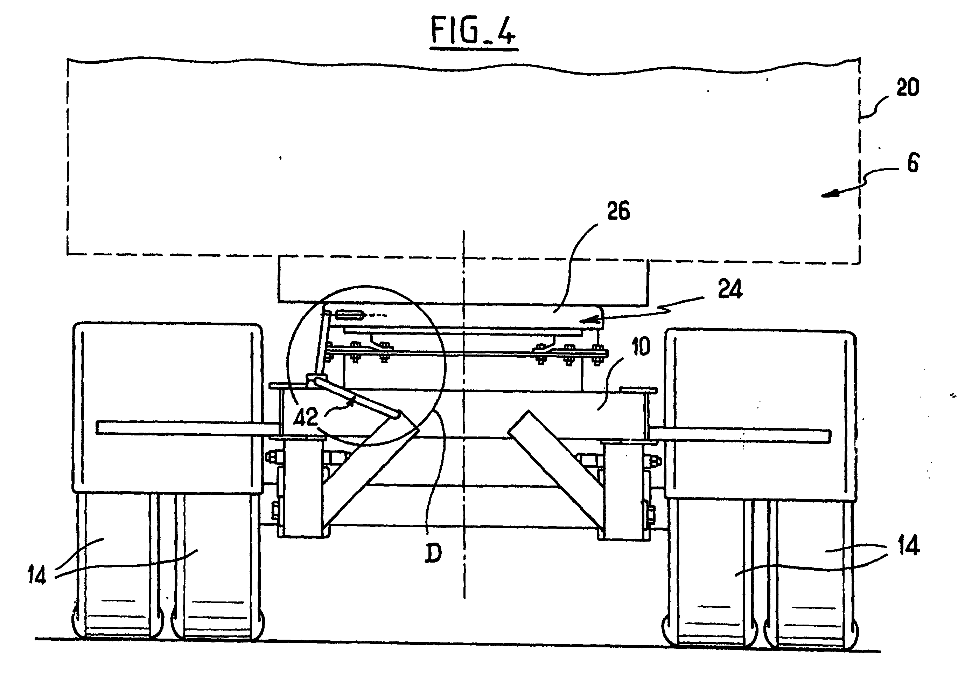

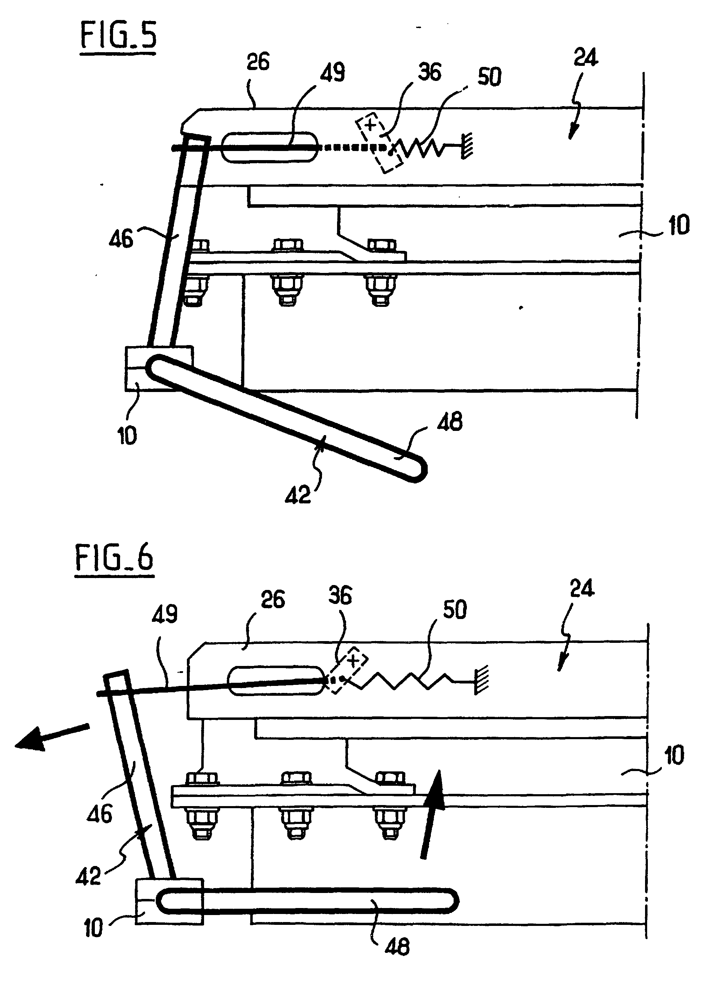

En référence aux figures 2 à 4, la sellette 24 comporte un plateau 26 présentant en vue de dessus une échancrure pour le guidage et la réception de la cheville. La sellette comprend un dispositif de fermeture comportant une fourche 30 mobile à rotation pour enfermer à volonté la cheville reçue dans la sellette. La sellette comporte un dispositif de verrouillage 31 d'un type général classique qui ne sera pas détaillé ici. Ce dispositif comporte un ressort 33 qui bloque en position une bielle 34 du dispositif qui immobilise la fourche 30 en position fermée. Il comporte également notamment un vérin pneumatique simple effet 32. Lorsqu'il est alimenté en air comprimé, le vérin 32 déplace la bielle 34 à l'encontre du ressort 33, ce qui autorise le cas échéant la rotation de la fourche 30 jusqu'à la position ouverte. Dans le premier cas, qui correspond à la position verrouillée, la remorque arrière 6 ne peut donc pas être dételée. Dans le deuxième cas, qui correspond à la position déverrouillée, la remorque 6 peut être dételée. La sellette 24 comporte un élément de déblocage 36 monté rotatif dans la sellette autour d'un axe horizontal parallèle à la direction de marche de l'ensemble. Cet élément, également connu en soi, peut occuper une position de blocage, illustrée à la figure 5, dans laquelle il n'autorise pas le déverrouillage de la sellette, et une position de déblocage dans laquelle il l'autorise, illustrée à la figure 6.

Lorsque la remorque arrière 6 est attelée à la remorque avant 4, leurs carrosseries 18, 20 sont distantes l'une de l'autre suivant la direction longitudinale des remorques, qui est la direction de marche de l'ensemble. Cette distance génère un espace de séparation 40 entre elles. La mobilité relative à rotation des remorques rend cet espace déformable.

La remorque avant 4 comporte un organe de déblocage ici sous la forme d'un levier 42 comportant un arbre 44 monté mobile à rotation directement sur un longeron du châssis 10 de la remorque avant, sur une face intérieure de celui-ci. La longueur de cet arbre 44 est d'environ 1,5 m. Au voisinage de la sellette 24, à l'arrière de l'arbre, le levier 42 présente une extrémité d'actionnement 46 faisant un angle avec l'arbre et reliée à l'élément 36 par un lien souple 49 tel qu'une chaîne traversant une lumière de la sellette. A l'extrémité opposée, à l'avant de l'arbre 44, le levier 42 présente une poignée de manoeuvre 48 faisant un angle droit avec l'arbre. La partie d'actionnement d'arrière 46 et la poignée de manoeuvre avant 48 ne sont pas coplanaires, comme l'illustrent les figures 5 et 6, de sorte que le levier 42 a dans son ensemble une forme gauche.

La poignée de manoeuvre 48 s'étend au droit de l'espace 40, approximativement à la verticale du centre de celui-ci. Il est donc facilement accessible par l'opérateur placé de l'autre côté du longeron au voisinage des roues ou se tenant entre les deux carrosseries 18, 20 dans l'espace 40. L'élément 36 est rappelé dans la position correspondant à l'absence d'autorisation de déverrouillage, illustrée à la figure 5, par un ressort de rappel 50. La manoeuvre de la poignée 48 permet de faire tourner le levier 42 pour agir à l'encontre de ce ressort et placer l'élément 36 dans la position autorisant le déverrouillage comme sur la figure 6. Grâce à l'élément de déblocage 36 limitant la course en rotation du levier 42, la poignée 48 s'étend toujours environ dans un plan horizontal et du même côté de l'arbre 44 que le ressort 50, au contraire de la partie d'actionnement 46 qui demeure sensiblement dans un plan vertical. Sachant qu'elles ont sensiblement même masse, il s'ensuit que le levier 42, sous l'effet de la gravité entraînant la poignée 48 vers le bas, est rappelé naturellement dans la position de la figure 5 n'autorisant pas le déverrouillage, ce qui soulage le ressort 50.

En référence à la figure 2, la remorque avant 4 comporte une main d'accouplement 52 reliée par un conduit flexible à une source d'air comprimé de la remorque avant ou du tracteur, et apte à être associée au circuit d'actionnement de freinage de la remorque arrière. La remorque arrière 6 comporte à cette fin une main 54 reliée au circuit d'actionnement de freinage de la remorque arrière. L'accouplement de ces deux mains 52, 54 apporte à la remorque arrière 6 l'air comprimé constituant l'énergie nécessaire au freinage.

La remorque avant 4 comporte de même une main d'accouplement 56 reliée par un conduit flexible au circuit de commande de freinage contrôlé par le conducteur. Cette main 56 peut être accouplée à une main 58 de la remorque arrière pour permettre la transmission à son circuit de freinage d'une commande de freinage également sous forme d'air comprimé. Ainsi, autant les mains 52, 54 assurent la transmission de l'énergie de freinage, autant les mains 56, 58 assurent la transmission du signal de commande de freinage. Un tel agencement pour le freinage pneumatique est connu en soi. Naturellement, les mains 52, 54 sont conformées de sorte qu'elles ne peuvent pas être accouplées aux mains 56, 58.

La remorque arrière 6 comporte une main d'accouplement 60 communiquant par un conduit flexible avec le vérin 32 de la sellette 24. Cette main est configurée pour pouvoir être accouplée à la main 52 de la remorque avant 4 fournissant l'air comprimé constituant l'énergie nécessaire au freinage. Lorsque cet accouplement est effectué, il provoque l'alimentation en air du vérin 32 de la sellette et son activation, c'est-à-dire le déverrouillage de la sellette si celui-ci est permis par l'élément 36.

Ainsi, pour dételer la remorque arrière 6 de la remorque avant 4, l'opérateur doit entre autres désaccoupler les mains 52 et 54 pour interrompre l'alimentation en énergie de freinage, faire passer le levier 42 de la position de la figure 5 à celle de la figure 6 pour autoriser le déverrouillage, puis tout en maintenant le levier dans cette position, accoupler les mains 52 et 60 pour déverrouiller la sellette 24. Après avoir ensuite séparé les mains 56 et 58 associées à la commande de freinage, il peut alors dételer la remorque arrière 6. Le fait que l'extrémité de manoeuvre soit accessible à l'endroit où se trouvent les mains d'accouplement, c'est-à-dire dans l'espace 40 ou au voisinage de celui-ci, facilite l'exécution de ces opérations par l'opérateur.

Pour atteler, l'opérateur remet les accouplements dans l'état initial, puis engage la cheville de la remorque arrière 6 dans la sellette 24, ce qui provoque automatiquement sa fermeture et son verrouillage.

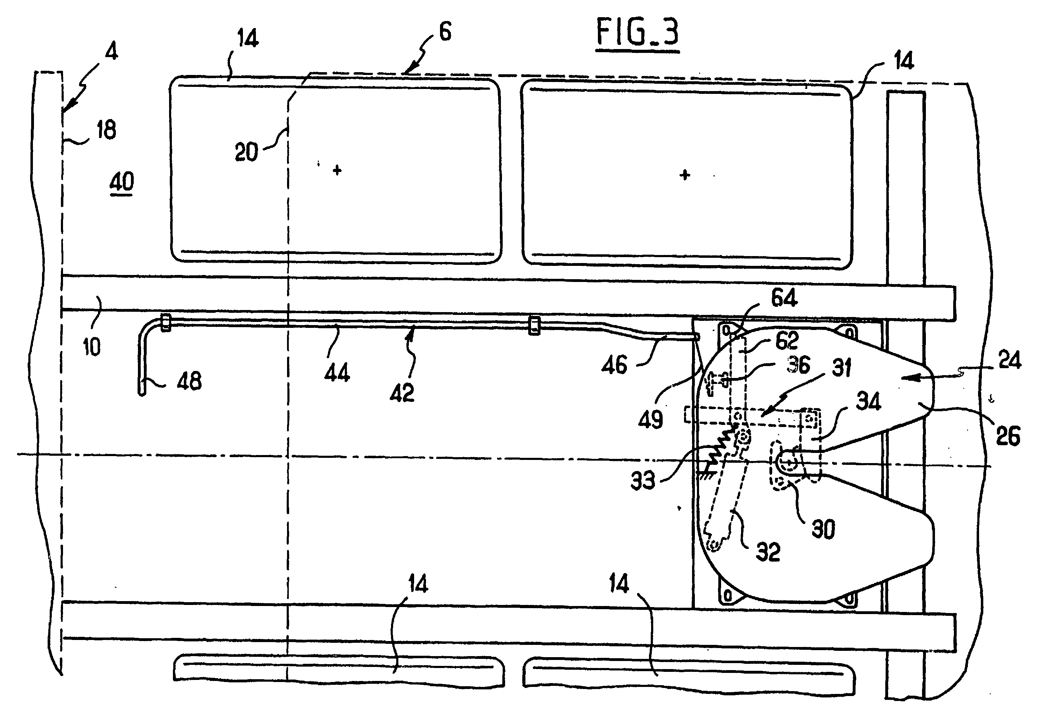

En référence à la figure 3, l'une des pièces 62 du dispositif de verrouillage 31 présente une extrémité 64 colorée en une couleur vive et apte à faire saillie à travers un jour de la sellette en position verrouillée de celle-ci. L'opérateur peut ainsi contrôler facilement l'état du verrouillage.

L'invention est également applicable aux ensembles routiers comprenant un tracteur et une unique remorque. La carrosserie du véhicule et/ou de la remorque pourra être réduite à un plateau fixé à leur châssis. La carrosserie pourra comprendre un container. Le levier 42 pourra être remplacé par l'élément de déblocage 36 prolongé pour s'étendre dans l'espace 40.

## Revendications

1. Ensemble routier comprenant :
- un véhicule (4) comportant une source d'air présentant une main d'accouplement (52), et une sellette verrouillable (24) comprenant un vérin (32) et une main d'accouplement (60) ; et
- une remorque (6) présentant une main (54) apte à être accouplée à la main (52) de la source pour alimenter la remorque en air,
**caractérisé en ce que** la main (60) de la sellette est apte à être accouplée à la main (52) de la source pour alimenter le vérin (32) en air.

2. Ensemble selon la revendication 1, **caractérisé en ce que** la main (54) de la remorque (6) communique avec un circuit d'air d'actionnement de freinage de la remorque (6), la remorque présentant une deuxième main (58) communiquant avec un circuit d'air de commande de freinage de la remorque.

3. Ensemble selon la revendication 1 ou 2, **caractérisé en ce que** le véhicule et la remorque comportent chacun une carrosserie (18, 20), la remorque (6) étant apte à être attelée au véhicule (4) de sorte que les carrosseries sont séparées par un espace (40), le véhicule comportant un organe de déblocage (42) présentant une extrémité de manoeuvre (48) et mobile entre une position dans laquelle il n'autorise pas le déverrouillage de la sellette (24) et une position dans laquelle il autorise le déverrouillage, l'extrémité de manoeuvre (48) s'étendant au droit de l'espace de séparation (40).

4. Ensemble selon la revendication 3, **caractérisé en ce qu'**il comprend un dispositif (31) de verrouillage de la sellette comportant un élément (62) autre que l'organe de déblocage (42), directement visible depuis l'extérieur du véhicule et apte à occuper deux positions différentes suivant que la sellette est verrouillée cu déverrouillée, cet élément présentant de préférence une couleur vive.

5. Ensemble selon l'une quelconque des revendications 3 ou 4, **caractérisé en ce que** l'organe de déblocage (42) comprend une extrémité (46) d'actionnement de la sellette (24), les deux extrémités (46, 48) étant non coplanaires.

6. Ensemble selon l'une quelconque des revendications 3 à 5, **caractérisé en ce que** l'organe de déblocage (42) est conformé de sorte qu'il tend sous l'effet de la pesanteur à se placer dans la position dans laquelle il n'autorise pas le déverrouillage.

7. Ensemble selon l'une quelconque des revendications à 3 à 6, **caractérisé en ce que** l'organe de déblocage (42) est relié par un lien souple (49) à un dispositif de verrouillage (31) de la sellette.

8. Ensemble selon l'une quelconque des revendications 1 à 7, **caractérisé en ce que** le véhicule (4) comprend une cheville d'attelage le rendant apte à être mené.

9. Ensemble selon l'une quelconque des revendications 1 à 8, **caractérisé en ce qu'**il comprend en outre un tracteur (2).

10. Ensemble selon l'une quelconque des revendications 1 à 7, **caractérisé en ce que** le véhicule est un tracteur.

## Patentansprüche

1. Lastfahrzeugeinheit mit:
- einem Fahrzeug (4), das eine Luftquelle, die ein Kupplungsglied (52) aufweist, und eine verriegelbare Sattelkupplung (24) aufweist, die einen Zylinder (32) und ein Kupplungsglied (60) umfaßt; und
- einem Anhänger (6), der ein Glied (54) aufweist, das in der Lage ist, an das Glied (52) der Quelle angekuppelt zu werden, um den Anhänger mit Luft zu versorgen,
**dadurch gekennzeichnet, daß** das Glied (60) der Sattelkupplung in der Lage ist, an das Glied (52) der Quelle angekuppelt zu werden, um den Zylinder (32) mit Luft zu versorgen.

2. Einheit nach Anspruch 1, **dadurch gekennzeichnet, daß** das Glied (54) des Anhängers (6) mit einem Luftkreislauf zum Betätigen des Bremsens des Anhängers (6) kommuniziert, wobei der Anhänger ein zweites Glied (58) aufweist, das mit einem Luftkreislauf zum Steuern des Bremsens des Anhängers kommuniziert.

3. Einheit nach Anspruch 1 oder 2, **dadurch gekennzeichnet, daß** das Fahrzeug und der Anhänger jeweils eine Karosserie (18, 20) aufweisen, wobei der Anhänger (6) geeignet ist, derart an das Fahrzeug (4) angekuppelt zu werden, daß die Karosserien durch einen Zwischenraum (40) getrennt sind, wobei das Fahrzeug ein Entblockungsmittel (42) aufweist, das ein Bedienende (48) aufweist und zwischen einer Position, in der es die Entriegelung der Sattelkupplung (24) nicht erlaubt und einer Position, in der es die Entriegelung erlaubt, mobil ist, wobei sich das Bedienende (48) gerade zum Trennzwischenraum (40) erstreckt.

4. Einheit nach Anspruch 3, **dadurch gekennzeichnet, daß** sie eine Vorrichtung (31) zum Verriegeln der Sattelkupplung umfaßt, die ein anderes Element (62) als das Entblockungsmittel (42) aufweist und direkt vom Äußeren des Fahrzeugs sichtbar ist und geeignet ist, zwei verschiedene Positionen einzunehmen, gemäß derer die Sattelkupplung verriegelt oder entriegelt ist, wobei dieses Element bevorzugt eine kräfige Farbe aufweist.

5. Einheit nach einem der Ansprüche 3 oder 4, **dadurch gekennzeichnet, daß** das Entblockungsmittel (42) ein Ende (46) zum Bedienen der Sattelkupplung (24) umfaßt, wobei die beiden Enden (46, 48) nicht koplanar sind.

6. Einheit nach einem der Ansprüche 3 bis 5, **dadurch gekennzeichnet, daß** das Entblockungsmittel (42) derart ausgebildet ist, daß es unter der Wirkung der Last danach strebt, eine Position einzunehmen, in der es die Entriegelung nicht erlaubt.

7. Einheit nach einem der Ansprüche 3 bis 6, **dadurch gekennzeichnet, daß** das Entblockungsmittel (42) über eine elastische Verbindung (49) mit einer Vorrichtung (31) zur Verriegelung der Sattelkupplung verbunden ist.

8. Einheit nach einem der Ansprüche 1 bis 7, **dadurch gekennzeichnet, daß** das Fahrzeug (4) einen Kupplungsstift umfaßt, der es in die Lage versetzt, gezogen zu werden.

9. Einheit nach einem der Ansprüche 1 bis 8, **dadurch gekennzeichnet, daß** sie außerdem eine Zugmaschine (2) umfaßt.

10. Einheit nach einem der Ansprüche 1 bis 7, **dadurch gekennzeichnet, daß** das Fahrzeug eine Zugmaschine ist.

## Claims

1. A road set comprising:
· a vehicle (4) including a source of air presenting a connector (52), and a lockable "fifth-wheel" coupling plate (24) including an actuator (32) and a connector (60); and
· a trailer (6) presenting a connector (54) suitable for being coupled to the connector (52) of the source in order to supply air to the trailer,
the road set being **characterized in that** the connector (60) of the coupling plate is suitable for being coupled to the connector (52) of the source in order to feed the actuator (32) with air.

2. A road set according to claim 1, **characterized in that** the connector (54) of the trailer (6) communicates with an air circuit for actuating braking of the trailer (6), the trailer presenting a second connector (58) communicating with an air circuit for controlling braking of the trailer.

3. A road set according to claim 1 or claim 2, **characterized in that** each of the vehicle and the trailer comprises bodywork (18, 20), the trailer (6) being suitable for being coupled to the vehicle (4) in such a manner that their bodies are separated by a gap (40), the vehicle including an unlocking member (42) presenting a drive end (48) movable between a position in which it does not allow the coupling plate (24) to be unlocked, and a position in which it allows unlocking, the drive end (48) extending in register with the separation gap (40).

4. A road set according to claim 3, **characterized in that** it includes a device (31) for locking the coupling plate, said device comprising an element (62) other than the unlocking member (42) and directly visible from outside the vehicle, said member being suitable for occupying two different positions depending on whether the coupling plate is locked on unlocked, said element preferably presenting a bright color.

5. A road set according to claim 3 or claim 4, **characterized in that** the unlocking member (42) has one end (46) for actuating the coupling plate (24), its two ends (46, 48) being non-coplanar.

6. A road set according to anyone of claims 3 to 5, **characterized in that** the unlocking member (42) is shaped in such a manner that it tends, under the effect of gravity, to take up the position in which it does not allow unlocking.

7. A road set according to any one of claims 3 to 6, **characterized in that** the unlocking member (42) is connected by a flexible link (49) to a device (31) for locking the coupling plate.

8. A road set according to any one of claims 1 to 7, **characterized in that** the vehicle (4) has a coupling pin making it suitable for being towed.

9. A road set according to any one of claims 1 to 8, **characterized in that** it further comprises a tractor (2).

10. A road set according to any one of claims 1 to 7, **characterized in that** the vehicle is a tractor.
